# EUROPEAN PATENT APPLICATION

(11) **EP 2 437 153 A2**
(43) Date of publication of application: **04.04.2012**
(21) Application number: 11180099.1
(22) Date of filing: 05.09.2011
(51) Int. Cl.: G06F 3/048

(54) **Apparatus and method for turning e-book pages in portable terminal**

(30) Priority: 01.10.2010 KR 20100095815; 28.01.2011 KR 20110008610
(71) Applicant: SAMSUNG ELECTRONICS CO., LTD., Suwon-si, Gyeonggi-do (KR)
(72) Inventor: Lee, Sung-Min, Seoul (KR); Lee, Dal-Kwang, Gyeonggi-do (KR)
(74) Representative: Jenkins, Richard Gavin

(57) **Abstract**

An apparatus and method turning pages of an electronic-book (e-book) in a portable terminal including an e-book function. The method includes displaying a first side of the e-book when a first touch is input in a first User Interface (UI) active area of a display of the portable terminal, displaying one of an immediately next page and a next page corresponding to an increased page number in response to a second touch being input in a second UI active area of the display and in response to a drag and release of the second touch while the first touch is maintained in the first UI active area, and cancelling the displaying of the one of the immediately next page and the next page corresponding to the increased page number in response to a drag and release of the first touch being input towards the second UI active area.

## Description

### TECHNICAL FIELD OF THE INVENTION

The present invention relates to a portable terminal. More particularly, the present invention relates to an apparatus and method for turning pages of an electronic-book (e-book) in a portable terminal having an e-book function.

### BACKGROUND OF THE INVENTION

The use of portable terminals is rapidly increasing due to convenience of portability, and thus service providers (or terminal vendors) are competitively developing terminals having more convenient functions to ensure more users. For example, the portable terminals provide various functions such as a phone book, a game, a scheduler, a short message, an Internet, an e-mail, an alarm, an MPEG Audio Layer-3 (MP3), a digital camera, an electronic dictionary, an electronic (e-book), etc.

The e-book for showing text contents has been introduced by using an electronic display mechanism as one of media for providing information in replacement of a conventional paper book. The e-book operates in such a manner that the text contents are stored in a flash memory or a built-in hard disk and then the stored text contents are displayed through a display screen. The e-book has an advantage in that a large volume of books are stored all together and can be read at a later time by selecting a desired part of the contents.

In this example, the contents can be displayed only in a limited area through the display screen, and thus a User Interface (UI) for providing a function of moving or scrolling a page is required to continuously show a next part of the contents. In general, a part of the text contents can be displayed on a screen while moving a page according to a page down/up function that uses a key input tool provided in the e-book. In this manner, a user can read a whole part of the text contents stored in the e-book.

However, an interface for turning a page through key manipulation is the most basic form of a direction control mechanism, and is not devised based on an ergonomic design which considers user convenience, Therefore, it is difficult for the user to naturally turn a page of the contents.

### SUMMARY OF THE INVENTION

To address the above-discussed deficiencies of the prior art, it is a primary object to provide at least the advantages described below. Accordingly, an aspect of the present disclosure is to provide an apparatus and method for turning pages of an electronic book (e-book) in a portable terminal including an e-book function.

Another aspect of the present disclosure is to provide an apparatus and method for turning pages of an e-book in an analog fashion in a portable terminal including an e-book function so that a user can change pages of contents in the same natural manner as turning pages of an actual paper book.

In accordance with an aspect of the present disclosure, a method for turning pages of an e-book in a portable terminal including an e-book function is provided. The method includes displaying a first side of the e-book when a first touch is input in a first User Interface (UI) active area of a display of the portable terminal, displaying one of an immediately next page and a next page corresponding to an increased page number in response to a second touch being input in a second UI active area of the display and in response to a drag and release of the second touch while the first touch is maintained in the first UI active area, and cancelling the displaying of the one of the immediately next page and the next page corresponding to the increased page number in response to a drag and release of the first touch being input towards the second UI active area.

In accordance with another aspect of the present disclosure, an apparatus for turning pages of an e-book in a portable terminal including an e-book function is provided. The apparatus includes an e-book viewer configured to execute the e-book function, and a display unit configured to: display a first side of the e-book when a first touch is input in a first User Interface (UI) active area of a display of the portable terminal; display one of an immediately next page and a next page corresponding to an increased page number in response to a second touch being input in a second UI active area of the display and in response to a drag and release of the second touch while the first touch is maintained in the first UI active area; cancel the displaying of the one of the immediately next page and the next page corresponding to the increased page number in response to a drag and release of the first touch being input towards the second UI active area; and display a corresponding page of the e-book under the control of the e-book viewer.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a structure of a portable terminal including an electronic-book (e-book) function according to the present disclosure.

FIG. 2 illustrates an example of a method for turning pages of an e-book on a single-page basis in a portable terminal including an e-book function according to a first exemplary embodiment of the present disclosure;

FIG. 3 illustrates a method for turning pages of an e-book on a single-page basis in a portable terminal including an e-book function according to a first exemplary embodiment of the present disclosure;

FIG. 4 illustrates an example of a method for turning pages of an e-book on a multi-page basis in a portable terminal including an e-book function according to a second exemplary embodiment of the present disclosure;

FIG. 5A and FIG. 5B illustrate a method for turning pages of an e-book on a multi-page basis in a portable terminal including an e-book function according to a second exemplary embodiment of the present disclosure;

FIG. 6 illustrates an example of a method for supporting a bookmark for an e-book in a portable terminal including an e-book function according to a third exemplary embodiment of the present disclosure;

FIG. 7A and FIG. 7B illustrate a method for supporting a bookmark for an e-book in a portable terminal including an e-book function according to a third exemplary embodiment of the present disclosure;

FIG. 8 illustrates an example of a method for turning pages of an e-book in an analog fashion by using two touches in a portable terminal including an e-book function according to a fourth exemplary embodiment of the present disclosure;

FIG. 9 illustrates an example of a method for turning pages of an e-book in an analog fashion by using two touches in a portable terminal including an e-book function according to a fourth exemplary embodiment of the present disclosure; and

FIG. 10A and FIG. 10B illustrates a method for turning pages of an e-book in an analog fashion by using two touches in a portable terminal including an e-book function according to a fourth exemplary embodiment of the present disclosure.

### DETAILED DESCRIPTION OF THE INVENTION

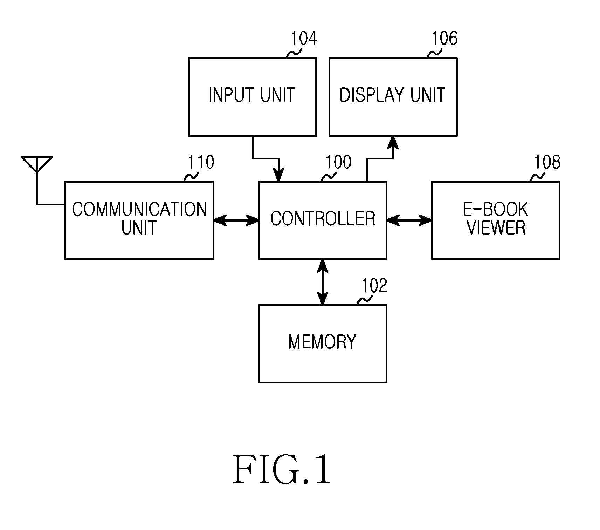

FIGURES 1 through 10B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged. In the following description, well-known functions or constructions are not described in detail since they would obscure the invention in unnecessary detail. Also, the terms used herein are defined according to the functions of the present invention. Thus, the terms may vary depending on user's or operator's intension and usage. That is, the terms used herein must be understood based on the descriptions made herein.

The present invention described hereinafter relates to an apparatus and method for turning pages of an electronic book (e-book) in a portable terminal including an e-book function.

A portable terminal described hereinafter includes a cellular phone including a touch panel, a Personal Communication System (PCS), a Personal Digital Assistant (PDA), an International Mobile Telecommunication-2000 (IMT2000) terminal, etc. The following description will be based on general configurations of the above examples.

FIG. 1 illustrates a structure of a portable terminal including an e-book function according to the present disclosure.

Referring to FIG. 1, the portable terminal includes a controller 100, a memory 102, an input unit 104, a display unit 106, an e-book viewer 108, and a communication unit 110.

The controller 100 provides overall control to the portable terminal. According to the present disclosure, the controller 100 processes a function of turning pages of an e-book in an analog fashion.

The memory 102 stores a microcode of a program for processing and control of the controller 100, a variety of reference data, temporary data that is generated while programs are performed, and a variety of rewritable data. In particular, according to the present disclosure, the memory 102 stores a program for turning the pages of the e-book in the analog fashion.

The input unit 104 includes numeral key buttons and a plurality of function key buttons to provide the controller 100 with key button input data corresponding to a key button pressed by the user.

The display unit 106 displays information such as state information, which is generated while the portable terminal operates, a limited number of characters, a large volume of moving and still pictures, etc. In addition to its typical function, according to the present disclosure, the display unit 106 is configured with a touch panel type and performs a function of the input unit 104. That is, the display unit 106 detects a touch input of the user and transmits the detected touch input to the controller 100.

The e-book viewer 108 performs a function for turning the pages of the e-book on a single-page basis or on a multi-page basis in the analog fashion so that the user can turn the page of contents naturally as if the user turns a page of an actual paper book. Further, the e-book viewer 108 supports a bookmark function for the e-book.

The communication unit 110 transmits and receives a Radio Frequency (RF) signal which is input and output through an antenna. For example, in a transmitting process, data to be transmitted is subject to a channel-coding process and a spreading process, and then the data is transformed to an RF signal. In a receiving process, the RF signal is received and transformed to a base-band signal, and the base-band signal is subject to a de-spreading process and a channel-decoding process, thereby restoring the data.

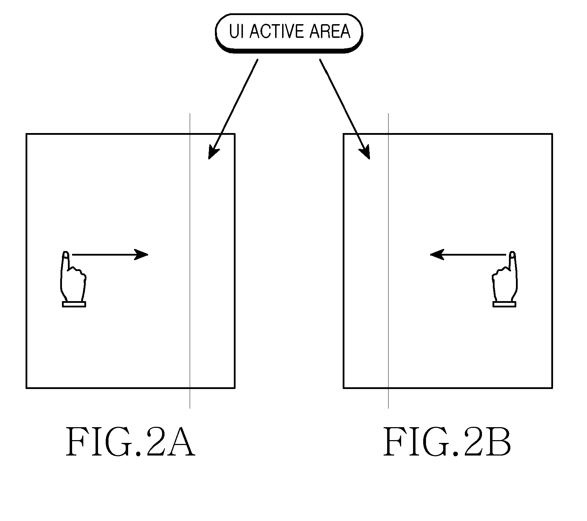

FIG. 2 illustrates an example of a method for turning pages of an e-book on a single-page basis in a portable terminal including an e-book function according to a first exemplary embodiment of the present disclosure.

Referring to FIG. 2, the terminal executes the e-book function and displays a pre-set page of the e-book selected by a user on a screen. In this example, a right portion of the screen is partially divided for a right UI active area, and a left portion of the screen is partially divided for a left UI active area. Herein, the right UI active area and the left UI active area are pre-set according to the terminal.

As illustrated in FIG. 2A, if a touch is input from the left of the pre-set right UI active area of the e-book and a drag and a release is input to the right while maintaining the touch input, then the terminal displays an immediately previous page on the screen. As illustrated in FIG. 2B, if a touch is input from the right of the pre-set left UI active area of the e-book and a drag and release is input to the left while maintaining the touch input, then the terminal displays an immediately next page on the screen. In some examples, the drag and release may be a flick or a swipe made in the UI active area of the e-book.

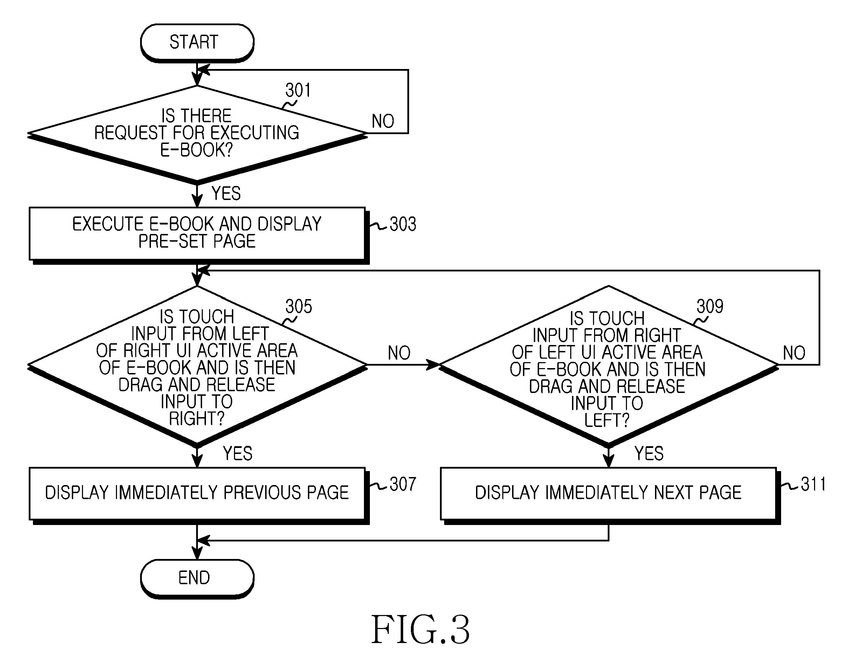

FIG. 3 illustrates a method for turning pages of an e-book on a single-page basis in a portable terminal including an e-book function according to a first exemplary embodiment of the present disclosure.

Referring to FIG. 3, the terminal detects a request for executing the e-book function by user's key manipulation in step 301.

If the request for executing the e-book function is detected in step 301, proceeding to step 303, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 305, the terminal determines whether a touch is input from the left of a pre-set right UI active area of the e-book and a drag and release is input to the right while maintaining the touch input.

If a determination is made in step 305 that the touch is input from the left of the pre-set right UI active area of the e-book and the drag and release is input to the right while maintaining the touch input, proceeding to step 307, the terminal displays an immediately previous page on a screen.

Otherwise, if a determination is made in step 305 that the touch is not input from the left of the pre-set right UI active area of the e-book and the drag and release is not input to the right while maintaining the touch input, proceeding to step 309, the terminal determines whether a touch is input from the right of a pre-set left UI active area of the e-book and a drag and release is input to the left while maintaining the touch input.

If a determination is made in step 309 that the touch is input from the right of the pre-set left UI active area of the e-book and the drag and release is input to the left while maintaining the touch input, proceeding to step 311, the terminal displays an immediately next page on the screen.

Otherwise, if a determination is made in step 309 that the touch is not input from the right of the pre-set left UI active area of the e-book and the drag and release is not input to the left while maintaining the touch input, returning to step 305, the subsequent steps are repeated.

Thereafter, the procedure of FIG. 3 ends.

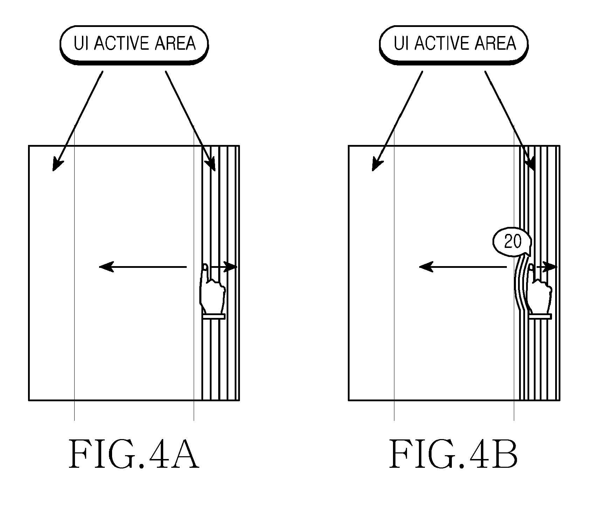

FIG. 4 illustrates an example of a method for turning pages of an e-book on a multi-page basis in a portable terminal including an e-book function according to a second exemplary embodiment of the present disclosure.

Referring to FIG. 4, the terminal executes the e-book function and displays a pre-set page of the e-book selected by a user on a screen. In this example, a right portion of the screen is partially divided for a right UI active area, and a left portion of the screen is partially divided for a left UI active area. Herein, the right UI active area and the left UI active area are pre-set according to the terminal.

If a touch is input in the pre-set right UI active area of the e-book, then the terminal displays a right lateral side of the e-book. In this example, as illustrated in FIG. 4A, when a drag and release is input to the left while maintaining the touch input, the terminal displays an immediately next page. On the other hand, as illustrated in FIG. 4B, when a drag is input to the right while maintaining the touch input, the terminal displays a page number increased by an extent of the drag in the right lateral side of the e-book, and when a drag and release is input to the left while maintaining the drag input, the terminal displays a next page corresponding to the increased page number.

Although not shown, if a touch is input in the pre-set left UI active area of the e-book, then the terminal displays a left lateral side of the e-book. In this example, when a drag and release is input to the right while maintaining the touch input, the terminal displays an immediately previous page on the screen. On the other hand, when a drag is input to the left while maintaining the touch input, the terminal displays a page number decreased by an extent of the drag in the left lateral side of the e-book, and when a drag and release is input to the right while maintaining the drag input, the terminal displays a previous page corresponding to the decreased page number.

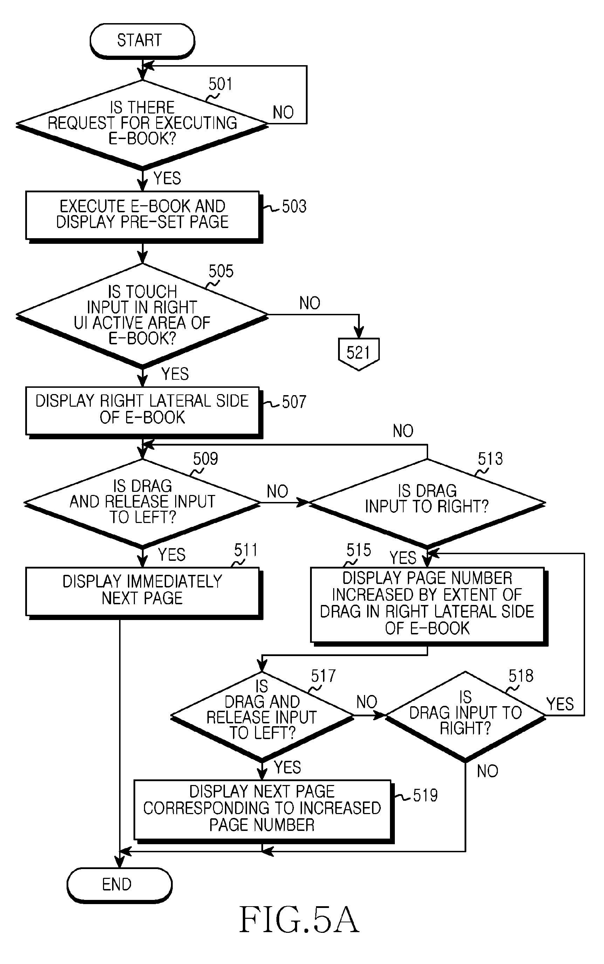

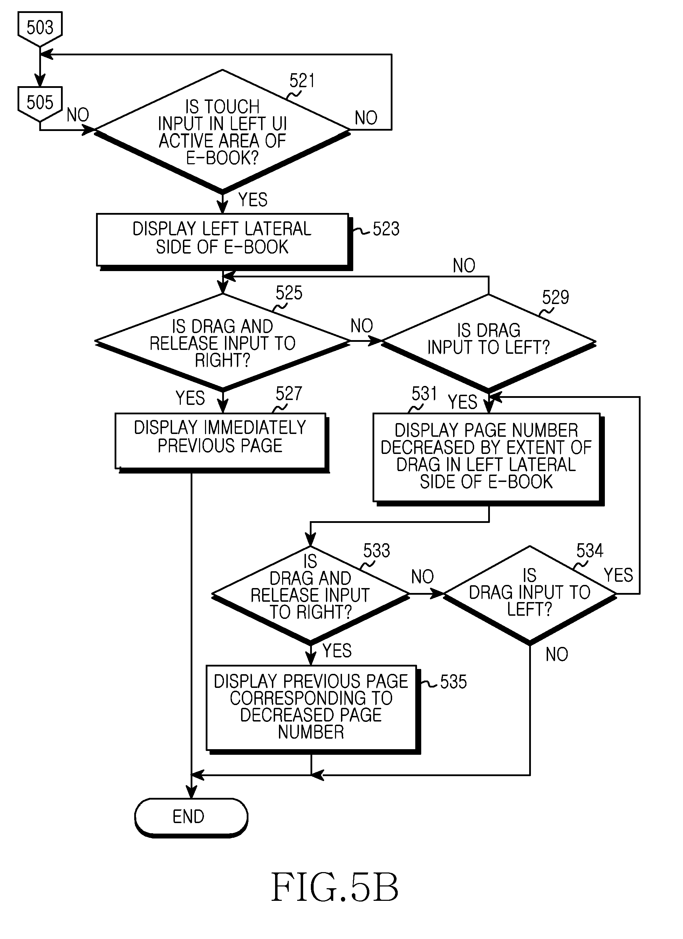

FIG. 5A and FIG. 5B illustrates a method for turning pages of an e-book on a multi-page basis in a portable terminal including an e-book function according to a second exemplary embodiment of the present disclosure.

Referring to FIG. 5A and FIG. 5B, the terminal detects a request for executing the e-book function by user's key manipulation in step 501.

If the request for executing the e-book function is detected in step 501, proceeding to step 503, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 505, the terminal determines whether a touch is input in a pre-set right UI active area of the e-book.

If a determination is made in step 505 that the touch is input in the pre-set right UI active area of the e-book, proceeding to step 507, the terminal displays a right lateral side of the e-book, and the procedure proceeds to step 509.

In step 509, the terminal determines whether a drag and release is input to the left while maintaining the touch input.

If a determination is made in step 509 that the drag and release is input to the left while maintaining the touch input, proceeding to step 511, the terminal displays an immediately next page on a screen.

Otherwise, if a determination is made in step 509 that the drag and release is not input to the left while maintaining the touch input, proceeding to step 513, the terminal determines whether a drag is input to the right while maintaining the touch input.

If a determination is made in step 513 that the drag is input to the right while maintaining the touch input, proceeding to step 515, the terminal displays a page number increased by an extent of the drag in the right lateral side of the e-book, and then the procedure proceeds to step 517. Herein, the page number displayed in the right lateral side is increased in proportion to a speed depending on the drag.

In step 517, the terminal determines whether a drag and release is detected to the left while maintaining the drag input.

If a determination is made in step 517 that the drag and release is input to the left while maintaining the drag input, proceeding to step 519, the terminal displays a next page corresponding to the increased page number.

Otherwise, if a determination is made in step 517 that the drag and release is not input to the left while maintaining the drag input, proceeding to step 518, the terminal determines whether the drag continues to be maintained to the right.

If a determination is made in step 518 that that drag continues to be maintained to the right, returning to step 515, the subsequent steps are repeated.

Otherwise, if a determination is made in step 518 that the drag does not continue to be maintained to the right, the procedure of FIG. 5 ends. For example, if the release is detected while maintaining the drag input without a drag input to the right or left, the procedure of FIG. 5 ends.

Meanwhile, if a determination is made in step 513 that the drag is not input to the right while maintaining the touch input, returning to step 509, the subsequent steps are repeated.

If a determination is made in step 505 that the touch is not input in the pre-set right UI active area of the e-book, proceeding to step 521, the terminal determines whether a touch is input in a pre-set left UI active area of the e-book.

If a determination is made in step 521 that the touch is input in the pre-set left UI active area of the e-book, proceeding to step 523, the terminal displays a left lateral side of the e-book, and the procedure proceeds to step 525.

In step 525, the terminal determines whether a drag and release is input to the right while maintaining the touch input.

If a determination is made in step 525 that the drag and release is input to the right while maintaining the touch input, proceeding to step 527, the terminal displays an immediately previous page.

Otherwise, if a determination is made in step 525 that the drag and release is not input to the right while maintaining the touch input, proceeding to step 529, the terminal determines whether a drag is input to the left while maintaining the touch input.

If a determination is made in step 529 that the drag is input to the left while maintaining the touch input, proceeding to step 531, the terminal displays a page number decreased by an extent of the drag in the left lateral side of the e-book, and then the procedure proceeds to step 533. Herein, the page number displayed in the left lateral side is decreased in proportion to a speed depending on the drag.

In step 533, the terminal determines whether a drag and release is input to the right while maintaining the drag input.

If a determination is made in step 533 that the drag and release is input to the right while maintaining the drag input, proceeding to step 535, the terminal displays a previous page corresponding to the decreased page number.

Otherwise, if a determination is made in step 533 that the drag and release is not input to the right while maintaining the drag input, proceeding to step 534, the terminal determines whether the drag is continues to be maintained to the left.

If a determination is made in step 534 that that drag continues to be maintained to the left, returning to step 531, the subsequent steps are repeated.

Otherwise, if a determination is made in step 534 that the drag does not continues to be maintained to the left, the procedure of FIG. 5 ends. For example, if the release is detected while maintaining the drag input without a drag input to the left or right, the procedure of FIG. 5 ends.

Meanwhile, if a determination is made in step 529 that the drag is not input to the left while maintaining the touch input, returning to step 525, the subsequent steps are repeated.

If a determination is made in step 521 that the touch is not input in the pre-set left UI active area of the e-book, returning to step 505, the subsequent steps are repeated.

Thereafter, the procedure of FIG. 5 ends.

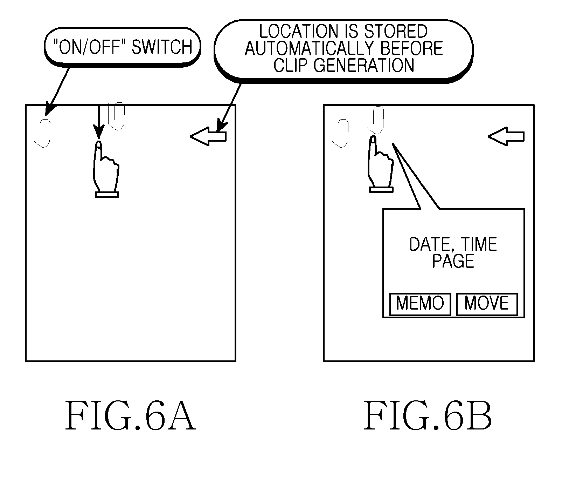

FIG. 6 illustrates an example of a method for supporting a bookmark for an e-book in a portable terminal including an e-book function according to a third exemplary embodiment of the present disclosure.

Referring to FIG. 6, the terminal performs the e-book function, displays a pre-set page of the e-book selected by a user on a screen, and activates a bookmark function by touching a bookmark "On/Off" switch. In this example, an upper portion of the screen is partially divided for an upper UI active area, and the upper UI active area is pre-set according to the terminal. The bookmark "On/Off" switch for activating/inactivating the bookmark function may be located in a left portion of the pre-set upper UI active area of the e-book, and can be displayed, for example, in a clip shape. In addition, a menu for automatically storing a position before moving to a bookmark page corresponding to a clip may be located in a right portion of the pre-set upper UI active area of the e-book, and can be displayed, for example, in an arrow shape.

As illustrated in FIG. 6A, if a touch is input in the pre-set upper UI active area of the e-book and a drag is input downwards while maintaining the touch input, then the terminal determines that the bookmark needs to be added and generates a clip corresponding to the bookmark to be added. Herein, a location of the clip can move according to a drag direction until a release is input while maintaining the drag input. Thereafter, if the release is input while maintaining the drag input, the terminal places the generated clip to a location at which the release is input. Herein, a shape, color, or the like of the generated clip can be determined according to pre-set information. Alternatively, while placing the generated clip to the location at which the release is input, an input window is displayed via a popup window to receive information such as the shape, color, or the like of the generated clip from the user, and the shape, color, or the like of the generated clip can be modified according to the input information.

As illustrated in FIG. 6B, if a touch is input for a clip corresponding to the previously added bookmark, then the terminal displays a corresponding bookmark page, and upon detection of a long touch for the clip corresponding to the previously added bookmark, the terminal determines that information on the previously added bookmark needs to be displayed, and thus displays information on a corresponding bookmark via a popup window. Herein, the long touch implies a continuous touch, for example, about 1 or 2 seconds, and the information on the bookmark may include information on a date of generating the bookmark, a time of generating the bookmark, a bookmark page, etc. In addition, the popup window can display not only the information on the bookmark but also a memo menu for writing a memo and a move menu for changing a location of the bookmark. In this example, when the user selects the memo menu, a memo window can be displayed to receive a content of memo for the bookmark, and when the user selects the move menu, a location change mode of the bookmark can be performed to receive the changed location of the clip corresponding to the bookmark.

Although not shown, if a touch is input for the clip for the previously added bookmark, the terminal displays a corresponding bookmark page, and if a drag and release is input to the left/right while maintaining the touch input for the clip corresponding to the previously added bookmark on which the bookmark page is displayed, then the terminal determines identifies a request to move the bookmark page corresponding to the previously added bookmark, and thus moves to the bookmark page.

Although not shown, if a touch is input for the clip corresponding to the previously added bookmark and a drag and release is input upwards while maintaining the touch input, then the terminal determines that the previously added bookmark needs to be removed, and thus deletes the clip corresponding to the bookmark.

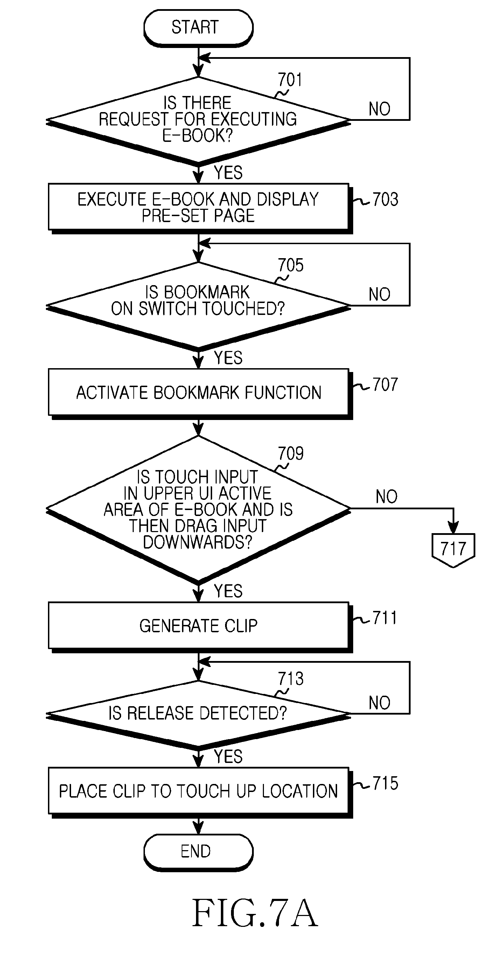

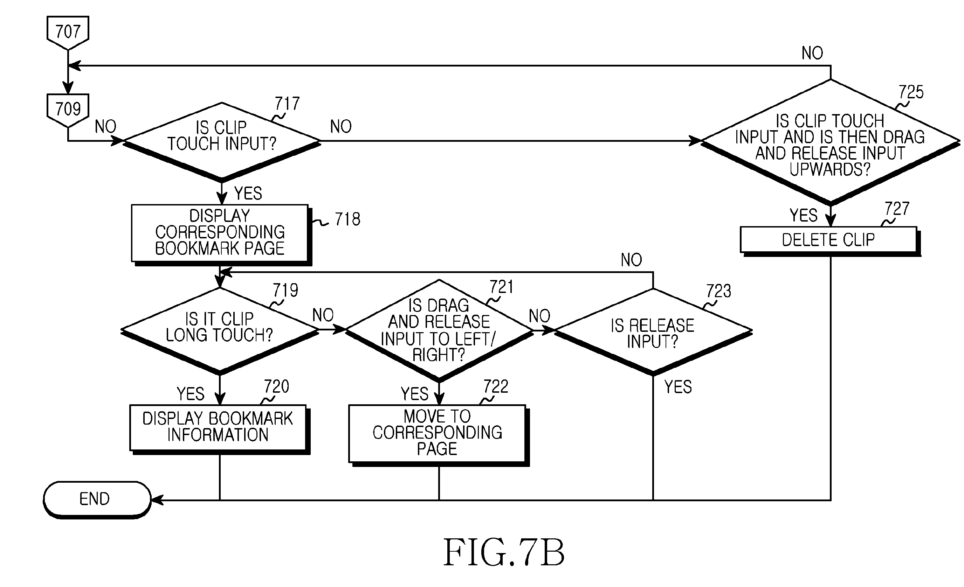

FIG. 7A and FIG. 7B illustrates a method for supporting a bookmark for an e-book in a portable terminal including an e-book function according to a third exemplary embodiment of the present disclosure.

Referring to FIG. 7A and FIG. 7B, the terminal detects a request for executing the e-book function by user's key manipulation in step 701.

If the request for executing the e-book function is detected in step 701, proceeding to step 703, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 705, the terminal determines whether a bookmark "On" switch is touched (i.e., whether a release is input after a touch). Herein, the bookmark "On" switch can be located, for example, in a left portion of a pre-set upper UI active area of the e-book, and may be displayed in a clip shape. In another example, the bookmark "On" switch can be implemented as one switch for performing both a function of the bookmark "On" switch and a function of a bookmark "Off" switch. In this example, when the switch is touched in the bookmark "Off" state, a state transition occurs to the bookmark "On" state to activate the bookmark function, and when the switch is touched in the bookmark "On" state, a state transition occurs to the bookmark "Off" state to inactivate the bookmark function.

If the terminal detects, in step 705, that the bookmark "On" switch is touched, proceeding to step 707, the terminal activates the bookmark function, and then the procedure proceeds to step 709.

In step 709, the terminal determines whether a touch is input in the pre-set upper UI active area of the e-book and a drag is input downwards while maintaining the touch input.

If a determination is made in step 709 that the touch is input in the pre-set upper UI active area of the e-book and the drag is input downwards while maintaining the touch input, proceeding to step 711, then the terminal generates a clip corresponding to a bookmark to be added, and the procedure proceeds to step 713. Herein, a location of the clip can move according to a drag direction until a release is detected while maintaining the drag input.

In step 713, the terminal determines whether a release is detected while maintaining the drag input.

If a determination is made in step 713 that the release is detected while maintaining the drag input, proceeding to step 715, the terminal places the generated clip to a location at which the release is input, and then the procedure of FIG. 7 ends. Herein, a shape, color, or the like of the generated clip can be determined according to pre-set information. Alternatively, while placing the generated clip to the location at which the release is input, an input window is displayed via a popup window to receive information such as the shape, color, or the like of the generated clip from the user, and the shape, color, or the like of the generated clip can be modified according to the input information.

Meanwhile, if a determination is made in step 709 that the touch is not input in the pre-set upper UI active area of the e-book and the drag is not input downwards while maintaining the touch input, proceeding to step 717, the terminal determines whether a touch is input for a clip corresponding to a previously added bookmark.

If a determination is made in step 717 that the touch is input for the clip corresponding to the previously added bookmark, proceeding to step 718, the terminal displays a corresponding bookmark page, and the procedure proceeds to step 719.

In step 719, the terminal determines whether a long touch is detected for the clip corresponding to the previously added bookmark on which the bookmark page is indicated. Herein, the long touch implies a continuous touch, for example, about 1 or 2 seconds.

If a determination is made in step 719 that the long touch for the clip corresponding to the previously added bookmark on which the bookmark page is displayed is detected, the terminal identifies a request to display information on the previously added bookmark on which the bookmark page is indicated, and proceeding to step 720, displays the information on the bookmark via a popup window, and then the procedure of FIG. 7 ends. Herein, the information on the bookmark may include information on a date of generating the bookmark, a time of generating the bookmark, a bookmark page, etc. In addition, the popup window can display not only the information on the bookmark but also a memo menu for writing a memo and a move menu for changing a location of the bookmark. In this example, when the user selects the memo menu, a memo window can be displayed to receive a content of memo for the bookmark, and when the user selects the move menu, a location change mode of the bookmark can be performed to receive the changed location of the clip corresponding to the bookmark.

Otherwise, if a determination is made in step 719 that the long touch is not detected for the clip corresponding to the previously added bookmark on which the bookmark page is indicated, proceeding to step 721, the terminal determines whether a drag and release is input to the left/right while maintaining the touch input.

If a determination is made in step 721 that the drag and release is input to the left/right while maintaining the touch input, the terminal identifies a request to move to a bookmark page corresponding to the previously added bookmark on which the bookmark page is indicated, and proceeding to step 722, moves to a corresponding bookmark page, and then the procedure of FIG. 7 ends.

Otherwise, if a determination is made in step 721 that the drag and release is not input to the left/right while maintaining the touch input, proceeding to step 723, the terminal determines whether a release is input while maintaining the touch input.

If a determination is made in step 723 that the release is input while maintaining the touch input, the procedure of FIG. 7 ends.

Otherwise, if a determination is made in step 723 that the release is not input while maintaining the touch input, returning to step 719, the subsequent steps are repeated.

Meanwhile, if a determination is made in step 717 that the touch is not input for the clip corresponding to the previously added bookmark, proceeding to step 725, the terminal determines whether a touch is input for the clip corresponding to the previously added bookmark and a drag and release is input upwards (e.g., up to the end of the upper direction) while maintaining the touch input.

If a determination is made in step 725 that the touch is input for the clip corresponding to the previously added bookmark and the drag and release is input upwards while maintaining the touch input, the terminal determines that the previously added bookmark needs to be removed. In step 727, the terminal deletes the clip corresponding to the bookmark, and then the procedure of FIG. 7 ends.

Otherwise, if a determination is made in step 725 that the touch is not input for the clip corresponding to the previously added bookmark and the drag and release is not input upwards while maintaining the touch input, returning to step 709, the subsequent steps are repeated.

Thereafter, the procedure of FIG. 7 ends.

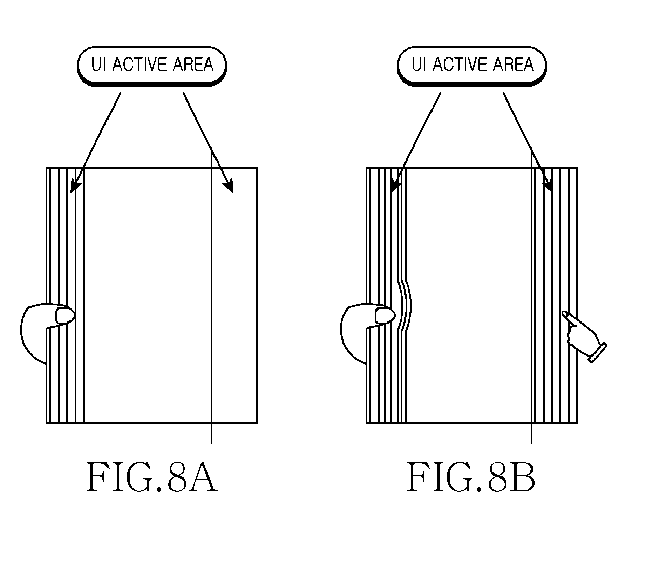

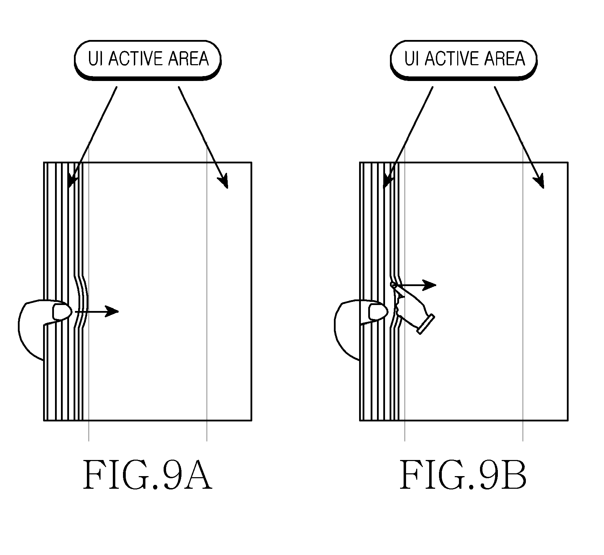

FIG. 8 and FIG. 9 illustrate examples of a method for turning pages of an e-book in an analog fashion by using two touches in a portable terminal including an e-book function according to a fourth exemplary embodiment of the present disclosure.

Referring to FIG. 8 and FIG. 9, the terminal executes the e-book function and displays a pre-set page of the e-book selected by a user on a screen. In this example, a right portion of the screen is partially divided for a right UI active area, and a left portion of the screen is partially divided for a left UI active area. Herein, the right UI active area and the left UI active area are pre-set according to the terminal.

If a touch is input in the pre-set left UI active area of the e-book, as illustrated in FIG. 8A, the terminal displays a left lateral side of the e-book. Thereafter, if a touch is input in the pre-set right UI active area of the e-book, as illustrated in step FIG. 8B, the terminal displays a right lateral side of the e-book, and if a drag and release is input to the left while maintaining the touch input in the right UI active area, the terminal displays an immediately next page or a next page corresponding to the increased page number. Alternatively, a 3-axis sensor, an acceleration sensor, and so on are used to display the immediately next page or the next page corresponding to the increased page number.

Herein, as illustrated in FIG. 9A, if a drag and release is input to the right while maintaining the touch input in the left UI active area, the terminal cancels the displaying of the immediately next page or the next page corresponding to the increased page number, and returns to a page prior to the immediately next page or a page prior to the next page corresponding to the increased page number. Alternatively, as illustrated in FIG. 9B, while maintaining the touch input in the left UI active area, if a different touch is input in the left UI active area and a drag and release is input to the right while maintaining the touch input, then the terminal may cancel the displaying of the immediately next page or the next page corresponding to the increased page number and return to a page prior to the immediately next page or a page prior to the next page corresponding to the increased page number. Alternatively, if an acceleration value greater than or equal to a threshold is detected in a left side by using the acceleration sensor or if an inclination value greater than or equal to a threshold is detected in a right direction by using the 3-axis sensor, then the terminal may cancel the displaying of the immediately next page or the next page corresponding to the increased page number and return to a page prior to the immediately next page or a page prior to the next page corresponding to the increased page number. Alternatively, although not shown, if a release is input while maintaining the touch input in the left UI active area, then the terminal may remove the displaying of the left lateral side of the e-book and fix the displaying of the immediately next page or the next page corresponding to the increased page number.

Although not shown, if a touch is input in the pre-set right UI active area of the e-book, then the terminal displays the right lateral side of the e-book. Thereafter, if a touch is input in the pre-set left UI active area of the e-book, then the terminal displays the left lateral side of the e-book, and if a drag and release is input to the right while maintaining the touch input in the left UI active area, the terminal displays an immediately previous page or a previous page corresponding to a decreased page number. Alternatively, a 3-axis sensor, an acceleration sensor, and so on are used to display the immediately previous page or the previous page corresponding to the decreased page number.

Likewise, if a drag and release is input to the left while maintaining the touch input in the right UI active area, the terminal cancels the displaying of the immediately previous page or the previous page corresponding to the decreased page number, and returns to a page prior to the immediately previous page or a page prior to the previous page corresponding to the decreased page number. Alternatively, while maintaining the touch input in the right UI active area, if a different touch is input in the right UI active area and a drag and release is input to the left while maintaining the different touch input, then the terminal may cancel the displaying of the immediately previous page or the previous page corresponding to the decreased page number and return to a page prior to the immediately previous page or a page prior to the previous page corresponding to the decreased page number. Alternatively, if an acceleration value greater than or equal to a threshold is detected in a right side by using the acceleration sensor or if an inclination value greater than or equal to a threshold is detected in a left direction by using the 3-axis sensor, then the terminal may cancel the displaying of the immediately previous page or the previous page corresponding to the decreased page number and return to a page prior to the immediately previous page or a page prior to the previous page corresponding to the decreased page number. Alternatively, although not shown, if the release is input while maintaining the touch input in the right UI active area, then the terminal may remove the displaying of the right lateral side of the e-book and fix the displaying of the immediately previous page or the previous page corresponding to the decreased page number.

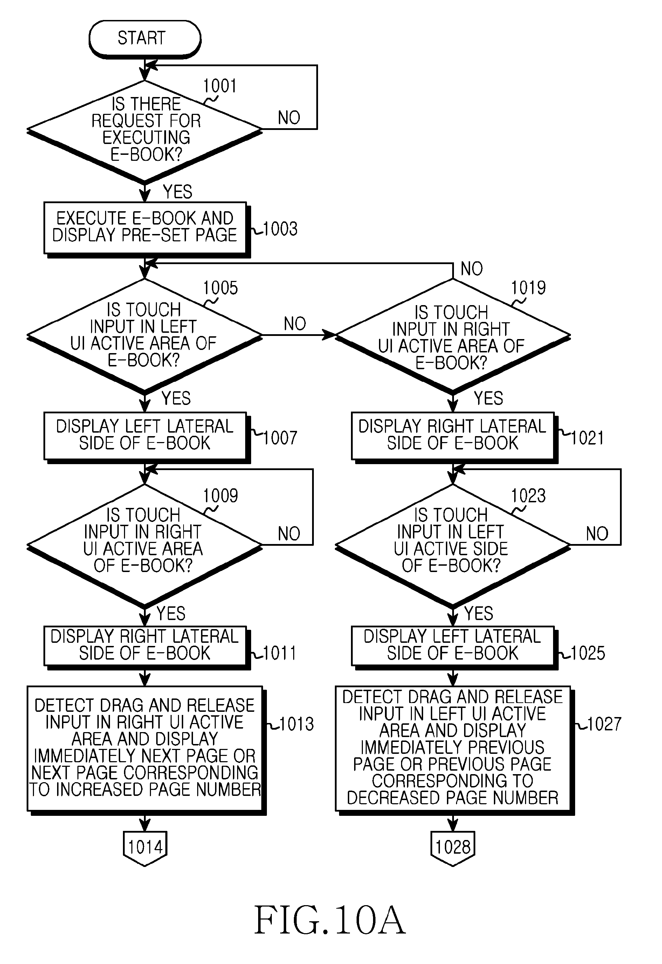

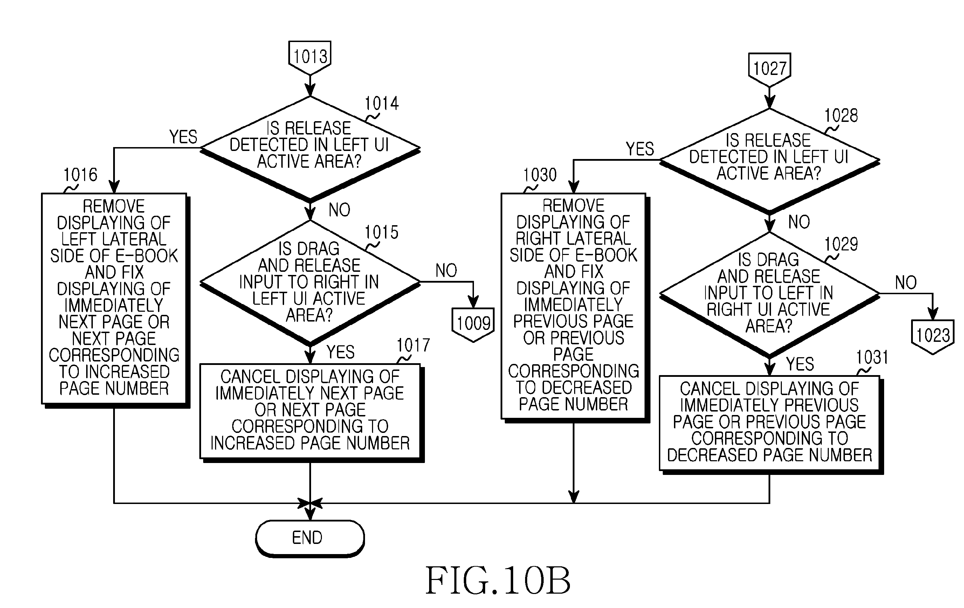

FIG. 10A and FIG. 10B are flowcharts illustrating a method for turning pages of an e-book in an analog fashion by using two touches in a portable terminal including an e-book function according to a fourth exemplary embodiment of the present disclosure.

Referring to FIG. 10A and FIG. 10B, the terminal detects a request for executing the e-book function according to user's key manipulation in step 1001.

If the request for executing the e-book function is detected in step 1001, proceeding to step 1003, the terminal executes the e-book function, and displays a pre-set page of the e-book selected by the user, according to configuration information of the e-book function. For example, the configuration information of the e-book may be configured in advance so that a first page of the e-book is first displayed or the most recently displayed page of the e-book is displayed when executing the e-book function.

In step 1005, the terminal determines whether a touch is input in a pre-set left UI active area of the e-book.

If a determination is made in step 1005 that the touch is input in the pre-set left UI active area of the e-book, proceeding to step 1007, the terminal displays a left lateral side of the e-book, and the procedure proceeds to step 1009.

In step 1009, the terminal determines whether a touch is input in a pre-set right UI active area of the e-book.

If a determination is made in step 1009 that the touch is input in the pre-set right UI active area of the e-book, proceeding to step 1011, the terminal displays a right lateral side of the e-book, and the procedure proceeds to step 1013.

In step 1013, while the touch is maintained in the left UI active area, the terminal detects a drag of the touch to the left while maintaining the touch input and release of the dragged touch input is input in the right UI active area, and then displays an immediately next page or a next page corresponding to an increased page number. For example, by determining whether the drag and release is input to the left while maintaining the touch input in the right UI active area, the immediately next page can be displayed on a screen upon detection of the input. In addition, by determining whether the drag is input to the right while maintaining the touch input in the right UI active area, a page number increased by an extent of the drag can be displayed in the right lateral side of the e-book upon detection of the input, and by determining whether the drag and release is input to the left while maintaining the drag input, a next page corresponding to the increased page number can be displayed upon detection of the input. Alternatively, a 3-axis sensor, an acceleration sensor, and so on are used to display the immediately next page or the next page corresponding to the increased page number.

In step 1014, the terminal determines whether a release is detected while maintaining the touch input in the left UI active area.

If a determination is made in step 1014 that the release is detected while maintaining the touch input in the left UI active area, proceeding to step 1016, the terminal removes the displaying of the left lateral side of the e-book and fixes the displaying of the immediately next page or the next page corresponding to the increased page number. Then, the procedure of FIG. 10 ends.

Otherwise, if a determination is made in step 1014 that the release is not detected while maintaining the touch input in the left UI active area, proceeding to step 1015, the terminal determines whether a drag and release is input to the right while maintaining the touch input in the left UI active area.

If a determination is made in step 1015 that the drag and release is detected to the right while maintaining the touch input in the left UI active area, proceeding to step 1017, the terminal cancels the displaying of the immediately next page or the next page corresponding to the increased page number, and returns to a page prior to the immediately next page or a page prior to the next page corresponding to the increased page number. Herein, the terminal may report a page movement to the user by using voice, vibration, etc.

Otherwise, if a determination is made in step 1015 that the drag and release is not input to the right while maintaining the touch input in the left UI active area, returning to step 1009, the subsequent steps are repeated.

Meanwhile, if a determination is made in step 1005 that the touch is not input in the pre-set left UI active area of the e-book, proceeding to step 1019, the terminal determines whether a touch is input in the pre-set right UI active area of the e-book.

If a determination is made in step 1019 that the touch is input in the pre-set right UI active area of the e-book, proceeding to step 1021, the terminal displays the right lateral side of the e-book, and then the procedure proceeds to step 1023.

In step 1023, the terminal determines whether a touch is input in the pre-set left UI active area of the e-book.

If a determination is made in step 1023 that the touch is input in the pre-set left UI active area of the e-book, proceeding to step 1025, the terminal displays the left lateral side of the e-book, and then the procedure proceeds to step 1027.

In step 1027, the terminal detects a drag and release which is input to the right while maintaining the touch input in the left UI active area, and displays an immediately previous page or a previous page corresponding to a decreased page number. For example, by determining whether the drag and release is input to the right while maintaining the touch input in the left UI active area, the immediately previous page can be displayed on the screen upon detection of the input. In addition, by determining whether the drag is input to the left while maintaining the touch input in the left UI active area, a page number decreased by an extent of the drag can be displayed in the left lateral side of the e-book upon detection of the input, and by determining whether the drag and release is input to the right while maintaining the drag input, a previous page corresponding to the decreased page number can be displayed upon detection of the input. Alternatively, a 3-axis sensor, an acceleration sensor, and so on are used to display the immediately previous page or the previous page corresponding to the decreased page number.

In step 1028, the terminal determines whether a release is detected while maintaining the touch input in the right UI active area.

If a determination is made in step 1028 that the release is detected while maintaining the touch input in the right UI active area, proceeding to step 1030, the terminal removes the displaying of the right lateral side of the e-book and fixes the displaying of the immediately previous page or the previous page corresponding to the decreased page number. Then, the procedure of FIG. 10 ends.

Otherwise, if a determination is made in step 1028 that the release is not detected while maintaining the touch input in the right UI active area, proceeding to step 1029, the terminal determines whether a drag and release is input to the left while maintaining the touch input in the right UI active area.

If a determination is made in step 1029 that the drag and release is input to the left while maintaining the touch input in the right UI active area, proceeding to step 1031, the terminal cancels the displaying of the immediately previous page or the previous page corresponding to the decreased page number, and returns to a page prior to the immediately previous page or a page prior to the previous page corresponding to the decreased page number. Herein, the terminal may report a page movement to the user by using voice, vibration, etc.

Otherwise, if a determination is made in step 1029 that the drag and release is not input to the left while maintaining the touch input in the right UI active area, returning to step 1023, the subsequent steps are repeated.

If a determination is made in step 1019 that the touch is not input in the pre-set right UI active area of the e-book, returning to step 1005, the subsequent steps are repeated.

Thereafter, the procedure of FIG. 10 ends.

According to the present disclosure, a User Interface (UI) for turning pages of an e-book in an analog fashion is provided in a portable terminal including an e-book function. Therefore, a user can change pages of contents in the same natural feeling as turning a page of an actual paper book.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method for turning pages of an electronic-book (e-book) in a portable terminal including an e-book function, the method comprising:
displaying a first side of the e-book when a first touch is input in a first User Interface (UI) active area of a display of the portable terminal;
displaying one of an immediately next page and a next page corresponding to an increased page number in response to a second touch being input in a second UI active area of the display and in response to a drag of the second touch and release of the second touch while the first touch is maintained in the first UI active area; and
cancelling the displaying of the one of the immediately next page and the next page corresponding to the increased page number in response to a drag and release of the first touch being input towards the second UI active area.

2. The method of claim 1 further comprising:
responsive to a different touch being input in the second UI active area and the drag and release of the second touch while the different touch is maintained, cancelling the displaying of the one of the immediately next page and the next page corresponding to the increased page number.

3. The method of claim 1 further comprising:
cancelling the displaying of the one of the immediately next page and the next page corresponding to the increased page number when one of an acceleration value greater than or equal to a threshold is detected in a first side of the portable terminal using an acceleration sensor and an inclination value greater than or equal to a threshold is detected in a direction towards a second side of the portable terminal using an axis sensor.

4. The method of claim 1 further comprising:
removing the displaying of the first side of the e-book displaying the one of the immediately next page and the next page corresponding to the increased page number in response to detecting a release of the first touch.

5. The method of claim 1 further comprising:
displaying a second side of the e-book in response to the second touch being input in the second UI active area of the display of the portable terminal;
displaying one of an immediately previous image and a previous page corresponding to a decreased page number in response to the first touch being input in the first UI active area of the display and in response to a drag and release of the first touch while the second touch input is maintained in the first UI active area; and
cancelling the displaying of the one of the immediately previous image and the previous page corresponding to the decreased page number in response to a drag and release of the second touch being input towards the first UI active area.

6. The method of claim 5 further comprising:
responsive to a different touch being input in the first UI active area and a drag and release of the first touch while the different touch is maintained, cancelling the displaying of the one of the immediately previous image and the previous page corresponding to the decreased page number.

7. The method of claim 5, further comprising:
cancelling the displaying of the one of the immediately previous page and the previous page corresponding to the increased page number when one of an acceleration value greater than or equal to a threshold is detected in a second side of the portable terminal using an acceleration sensor and an inclination value greater than or equal to a threshold is detected in a direction towards a first side of the portable terminal using an axis sensor.

8. The method of claim 5, further comprising:
removing the displaying of second side of the e-book and displaying the one of the immediately previous page and the previous page corresponding to the increased page number in response to detecting a release of the second touch.

9. An apparatus for turning pages of an electronic-book (e-book) in a portable terminal including an e-book function, the apparatus comprising:
an e-book viewer configured to execute the e-book function; and
a display unit configured to:
display a first side of the e-book when a first touch is input in a first User Interface (UI) active area of a display of the portable terminal;
display one of an immediately next page and a next page corresponding to an increased page number in response to a second touch being input in a second UI active area of the display and in response to a drag of the second touch and release of the second touch while the first touch is maintained in the first UI active area;
cancel the displaying of the one of the immediately next page and the next page corresponding to the increased page number in response to a drag and release of the first touch being input towards the second UI active area; and
display a corresponding page of the e-book under the control of the e-book viewer.

10. The apparatus of claim 9, wherein the e-book viewer is further configured to cancel the displaying of the one of the immediately next page and the next page corresponding to the increased page number in response to a different touch being input in the second UI active area and the drag and release of the second touch while the different touch is maintained.

11. The apparatus of claim 9, wherein the e-book viewer is further configured to cancel the displaying of the one of the immediately next page and the next page corresponding to the increased page number when one of an acceleration value greater than or equal to a threshold is detected in a first side of the portable terminal using an acceleration sensor and an inclination value greater than or equal to a threshold is detected in a direction towards a second side of the portable terminal using an axis sensor.

12. The apparatus of claim 10, wherein the display unit is further configured to remove the displaying of the first side of the e-book and display the one of the immediately next page and the next page corresponding to the increased page number in response to detecting a release of the first touch..

13. The apparatus of claim 9, wherein the display unit is further configured to:
display a second side of the e-book in response to the second touch being input in the second UI active area of the display of the portable terminal;
displaying one of an immediately previous image and a previous page corresponding to a decreased page number in response to the touch being input in the first UI active area of the display and in response to a drag and release of the first touch while the second touch is maintained in the first UI active area; and
cancelling the displaying of the one of the immediately previous image and the previous page corresponding to the decreased page number in response to a drag and release of the second touch being input towards the first UI active area.

14. The apparatus of claim 13, wherein the e-book viewer is further configured to cancel the displaying of the one of the immediately previous image and the previous page corresponding to the decreased page number in response to a different touch being input in the first UI active area and a drag and release of the first touch while the different touch is maintained.

15. The apparatus of claim 13, wherein the displaying of the one of the immediately previous page and the previous page corresponding to the increased page number is cancelled by controlling the display unit when one of an acceleration value greater than or equal to a threshold is detected in a second side of the portable terminal using an acceleration sensor and an inclination value greater than or equal to a threshold is detected in a direction towards a first side of the portable terminal using an axis sensor.
